# EUROPEAN PATENT APPLICATION

(11) **EP 4 567 911 A1**
(43) Date of publication of application: **11.06.2025**
(21) Application number: 24212979.9
(22) Date of filing: 14.11.2024
(51) Int. Cl.: H01M 4/04, H01M 4/139, H01M 10/04

(54) **APPARATUS AND METHOD FOR MANUFACTURING ELECTRODE PLATE**

(30) Priority: 08.12.2023 KR 20230177807
(71) Applicant: Samsung SDI Co., Ltd, Gyeonggi-do 17084 (KR)
(72) Inventor: Yoo, Dae Yeol, Suwon-si, Gyeonggi-do 16678 (KR); Joo, Young Ha, Suwon-si, Gyeonggi-do 16678 (KR)
(74) Representative: Gulde & Partner

(57) **Abstract**

An electrode plate manufacturing apparatus (200) capable of improving quality of electrode plates (300) through quantification of an undried state thereof is disclosed. The electrode plate manufacturing apparatus (200) includes: a plate conveyor (201) conveying a plurality of electrode plates (300) each having an active material layer formed on a substrate thereof; a dryer (221, 222) drying the electrode plates (300) conveyed by the plate conveyor (201); a sensor (240) measuring a degree of dryness of each of the plurality of dried electrode plates (300); an assistant dryer (250) performing additional drying with respect to at least one of the plurality of electrode plates (300); and a processor controlling the assistant dryer based on the degree of dryness.

## Description

### Field of the Invention

Aspects of the present invention relate to an apparatus and method for manufacturing an electrode plate.

### Description of the Related Art

In recent years, demand for high energy density and high-capacity secondary batteries has grown rapidly with rapid spread of electronic devices using batteries, such as mobile phones, notebook computers, and electric vehicles. Thus, various research and development has been actively carried out to improve lithium secondary batteries.

A lithium secondary battery includes a cathode, an anode, an electrolyte, and a separator interposed between the cathode and the anode that contain active materials allowing intercalation and deintercalation of lithium ions, and produces electrical energy through oxidation and reduction upon intercalation/deintercalation of lithium ions in the cathode and the anode.

An electrode plate including a cathode and/or an anode includes a substrate and an active material layer coated onto the substrate. In general, the electrode plate is formed by applying an active material layer to the substrate. The active material layer is secured to the substrate by drying. However, if the active material layer is not properly dried, various losses can occur upon setting conditions for manufacture of the electrode plate. For example, the active material layer can be unevenly dried due to an air stream inside a dryer depending on a dryer structure and/or a circulation method. As a result, the process speed and/or adhesive properties of the active material layer can be deteriorated.

This section is intended to provide a better understanding of the background of the invention and thus may include information which is not necessarily prior art.

### Summary of the Invention

According to an aspect of embodiments of the present invention, an electrode plate manufacturing apparatus and an electrode plate manufacturing method are provided. According to another aspect of embodiments of the present invention, an apparatus and method for manufacturing an electrode plate by drying the electrode plate are provided. According to another aspect of embodiments of the present invention, an electrode plate manufacturing apparatus and method for manufacturing an electrode plate capable of improving quality of electrode plates through quantification of an undried state thereof are provided.

For example, one embodiment provides an electrode plate manufacturing apparatus and/or an electrode plate manufacturing method that determines a degree of dryness of an electrode plate after drying the electrode plate.

For example, one embodiment provides an electrode plate manufacturing apparatus and/or an electrode plate manufacturing method that quantifies the degree of dryness of an electrode plate.

For example, one embodiment provides an electrode plate manufacturing apparatus and/or an electrode plate manufacturing method that additionally dries the electrode plate based on the degree of dryness of the electrode plate.

For example, one embodiment provides an electrode plate manufacturing apparatus and/or an electrode plate manufacturing method that ensures that the electrode plates can be uniformly dried.

For example, one embodiment provides an electrode plate manufacturing apparatus and/or an electrode plate manufacturing method that allows reduction in binder migration speed.

The above and other aspects and features of the present invention will become apparent from the following description of some embodiments of the present invention.

In accordance with one aspect of the present invention, there is provided an electrode plate manufacturing apparatus including: a plate conveyor conveying a plurality of electrode plates each including an active material layer formed on a substrate thereof; a dryer drying the electrode plates conveyed by the plate conveyor; a sensor measuring a degree of dryness of each of the plurality of dried electrode plates; an assistant dryer performing additional drying with respect to at least one of the plurality of electrode plates; and a processor controlling the assistant dryer based on the degree of dryness.

In accordance with another aspect of the present invention, there is provided an electrode plate manufacturing method including: applying an active material to one surface of a substrate to form an active material layer thereon; drying the active material layer; measuring a degree of dryness of the active material layer; and additionally drying the active material layer based on the degree of dryness.

An electrode plate manufacturing apparatus and/or an electrode plate manufacturing method according to embodiments of the present invention can improve quality of an electrode plate.

For example, the electrode plate manufacturing apparatus and/or the electrode plate manufacturing method according to the embodiments of the present invention can improve adhesion of an active material layer to a substrate.

For example, the electrode plate manufacturing apparatus and/or the electrode plate manufacturing method according to the embodiments of the present invention can ensure the same/similar adhesive properties of the active material layers formed on both surfaces of the substrate.

In addition, the electrode plate manufacturing apparatus and/or the electrode plate manufacturing method according to the embodiments of the present invention can improve convenience through automation of an electrode plate manufacturing process.

Further, the electrode plate manufacturing apparatus and/or the electrode plate manufacturing method according to the embodiments of the present invention can reduce overall input heat.

However, aspects and features of the present invention are not limited to those described above and other aspects and features not mentioned will be clearly understood by those skilled in the art from the detailed description provided below.

### Brief Description of the Drawings

The following drawings attached to this specification illustrate some embodiments of the present invention, and further describe aspects and features of the present invention together with the detailed description of the present invention. However, the present invention should not be construed as being limited to the drawings:
FIG. 1 to FIG. 4 are schematic views of lithium secondary batteries according to some embodiments of the present invention;
FIG. 5 is a schematic block diagram illustrating components of an electrode plate manufacturing apparatus according to an embodiment of the present invention;
FIG. 6 is a view of an example of operation of the electrode plate manufacturing apparatus upon drying electrode plates;
FIG. 7 is a view of an example of operation of an electrode plate manufacturing apparatus according to an embodiment of the present invention upon drying electrode plates;
FIG. 8 is a flowchart illustrating an electrode plate manufacturing method according to an embodiment of the present invention;
FIG. 9 is a schematic block diagram illustrating components of a sensor according to an embodiment of the present invention;
FIG. 10 is a flowchart illustrating an example of method step S 103 in FIG. 8;
FIG. 11 is a flowchart illustrating an example of method step S 104 in FIG. 8;
FIG. 12 is a schematic block diagram illustrating components of an electrode plate manufacturing apparatus according to an embodiment of the present invention; and
FIG. 13 is a view of an electrode plate manufacturing apparatus according to an embodiment of the present invention.

### Detailed Description of the Invention

Hereinafter, exemplary embodiments of the present invention will be described, in detail, with reference to the accompanying drawings. The terms or words used in this specification and claims should not be construed as being limited to the usual or dictionary meaning and should be interpreted as having meanings and concepts consistent with the technical idea of the present invention based on the principle that the inventor can be his/her own lexicographer to appropriately define the concept of the term to explain his/her invention in the best way. The embodiments described in this specification and the configurations shown in the drawings are provided as some of the embodiments of the present invention and do not necessarily represent all of the technical ideas, aspects, and features of the present invention. Accordingly, it should be understood that there may be various equivalents and modifications that can replace or modify the embodiments described herein at the time of filing this application. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof. Further, the use of "may" when describing embodiments of the present invention relates to "one or more embodiments of the present invention."

In the figures, dimensions of the various elements, layers, etc. may be exaggerated for clarity of illustration. The same reference numerals designate the same elements.

References to two compared elements, features, etc. as being "the same," may mean that they are "the same or substantially the same." Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless specified otherwise, each element may be singular or plural.

When an arbitrary element is referred to as being disposed (or located or positioned) "above" (or "below") or "on" (or "under") a component, it may mean that the arbitrary element is placed in contact with the upper (or lower) surface of the component and may also mean that one or more other components may be interposed between the component and any arbitrary element disposed (or located or positioned) on (or under) the component.

In addition, it will be understood that, when an element is referred to as being "coupled," "linked" or "connected" to another element, the elements may be directly "coupled," "linked" or "connected" to each other, or one or more intervening elements may be present therebetween, through which the element may be "coupled," "linked" or "connected" to another element. In addition, when a part is referred to as being "electrically coupled" to another part, the part can be directly connected to another part or one or more intervening parts may be present therebetween such that the part and the another part are indirectly connected to each other.

Throughout the specification, when "A and/or B" is stated, it means A, B or A and B, unless specified otherwise. That is, "and/or" includes any or all combinations of a plurality of items enumerated. When "C to D" is stated, it means C or more and D or less, unless specified otherwise.

The terminology used herein is for the purpose of describing embodiments of the present invention and is not intended to be limiting of the present invention.

### Lithium secondary battery

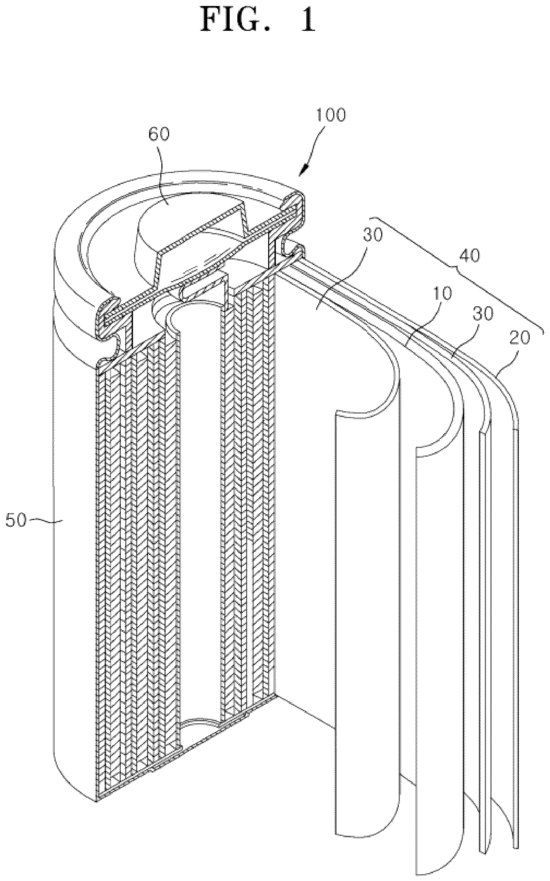

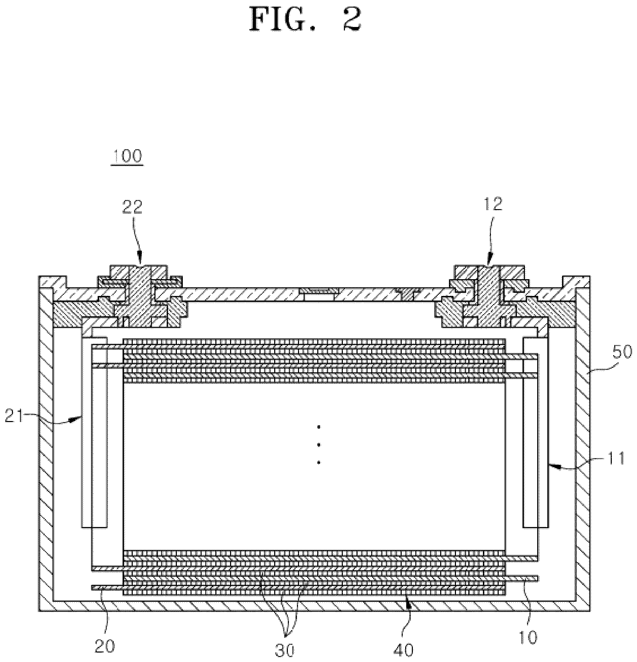

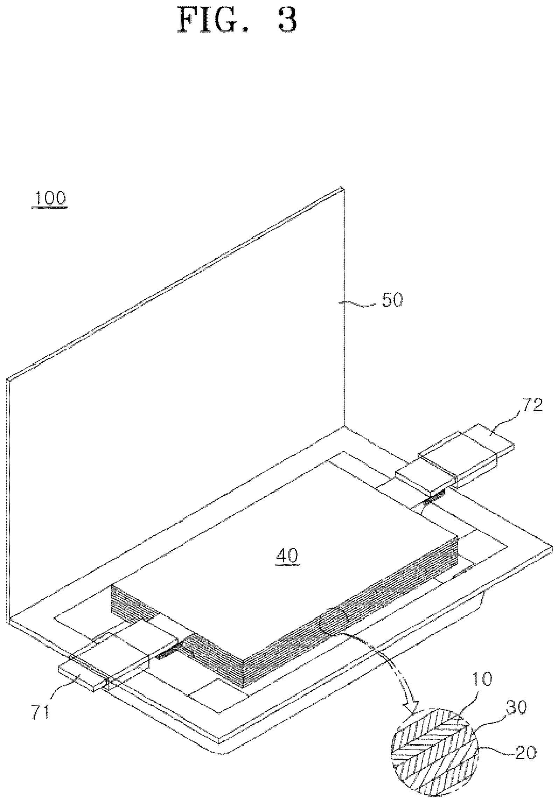

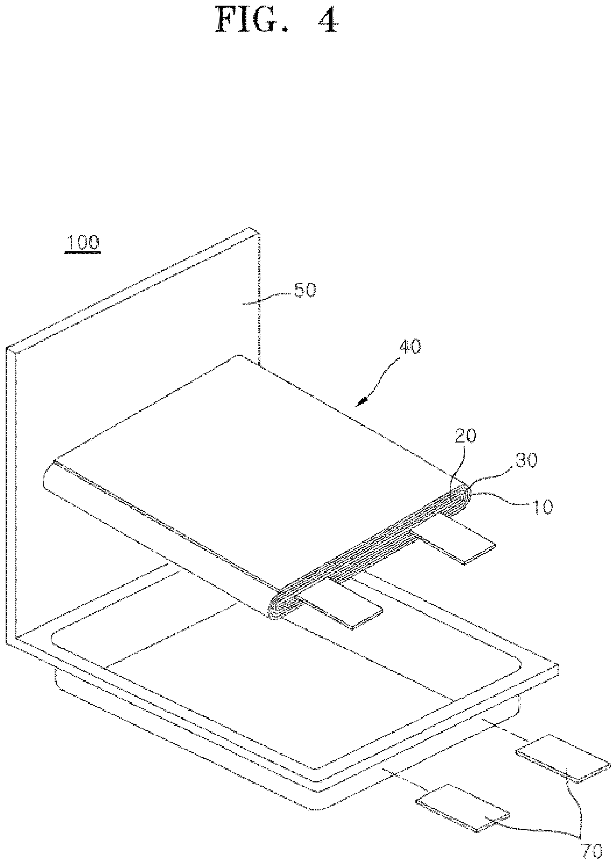

Lithium secondary batteries may be classified into a cylindrical secondary battery, a faceted secondary battery, a pouch type secondary battery, a coin type secondary battery, and the like based on the shapes thereof. FIG. 1 to FIG. 4 are schematic views of lithium secondary batteries according to embodiments of the present invention, in which FIG. 1 shows a cylindrical secondary battery, FIG. 2 shows a faceted secondary battery, and FIG. 3 and FIG. 4 show pouch-type secondary batteries. Referring to FIG. 1 to FIG. 4, a lithium secondary battery 100 may include an electrode assembly 40 in which a separator 30 is interposed between a cathode 10 and an anode 20, and a case 50 that receives the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In an embodiment, as shown in FIG. 2, the lithium secondary battery 100 may include a cathode lead tab 11, a cathode terminal 12, an anode lead tab 21, and an anode terminal 22. As shown in FIG. 3 and FIG. 4, the lithium secondary battery 100 may include electrode tabs 70, that is, a cathode tab 71 and an anode tab 72, which act as electrical pathways conducting current formed in the electrode assembly 40 to the outside.

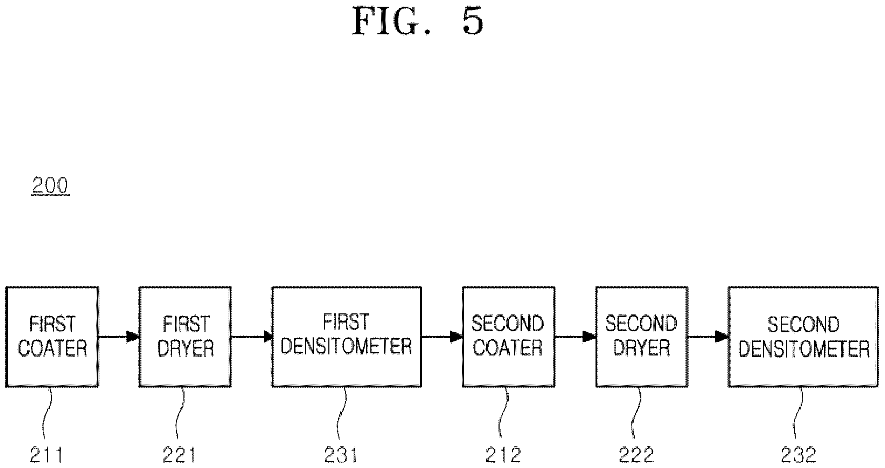

With reference to FIG. 1 to FIG. 4, schematic components and/or materials of the lithium secondary battery are described above. Hereinafter, referring to FIG. 5 to FIG. 12, a method of manufacturing the lithium secondary battery 100, as shown in FIG. 1 to FIG. 4 will be described. For example, FIG. 5 to FIG. 12 show an apparatus and/or method for manufacturing an electrode plate in the lithium secondary battery 100.

FIG. 5 is a schematic block diagram illustrating components of an electrode plate manufacturing apparatus according to an embodiment.

Referring to FIG. 5, reference numeral 200 denotes an electrode plate manufacturing apparatus. The electrode plate manufacturing apparatus 200 manufactures an electrode plate. The electrode plates include, for example, a cathode plate forming the cathode 10 illustrated in FIG. 1 to FIG. 4 and an anode plate forming the anode 20 illustrated in FIG. 1 to FIG. 4.

The electrode plate is formed by applying an active material to a substrate to form an active material layer thereon. For example, the electrode plate is formed by applying an active material to both, or opposite, surfaces of the substrate to form active material layers thereon. The electrode plate manufacturing apparatus 200 and/or an electrode plate manufacturing method according to embodiments of the invention includes both an electrode plate formed by applying an active material to one surface of the substrate and an electrode plate formed by applying an active material to both surfaces of the substrate. However, for convenience of description, the following description will focus on an electrode plate formed by applying the active material to both surfaces of the substrate to form the active material layers thereon by way of example.

For example, the cathode plate includes a cathode substrate and a cathode material layer formed on the cathode substrate. The cathode substrate is, for example, a cathode current collector. The cathode material layer includes a cathode material and may further include a binder and/or a conductive material.

For example, the anode plate includes an anode substrate and an anode material layer formed on the anode substrate. The anode substrate is, for example, an anode current collector. The anode material layer includes an anode material and may further include a binder and/or a conductive material.

To manufacture such an electrode plate, the electrode plate manufacturing apparatus 200 may include a first coater 211, a first dryer 221, a second coater 212, a second dryer 222, and a processor (not shown) that controls all or some components included in the electrode plate manufacturing apparatus 200. In addition, the electrode plate manufacturing apparatus 200 may further include at least one of a first densitometer 231 and a second densitometer 232.

The first coater 211 applies an active material to a first surface of the substrate to form an active material layer thereon. The active material layer is, for example, in a solution state and/or in a slurry state. The first coater 211 includes a first die coater (not shown) that ejects the active material onto the substrate. For example, the first die coater may extend in a width direction of the substrate to eject the active material over an entire width of the substrate. With this structure, the first coater 211 can apply the active material evenly over a wide width of the substrate to form the active material layer thereon.

The first dryer 221 dries the active material layer on the first surface of the substrate. Here, the first dryer 221 does not completely dry the active material layer on the first surface of the substrate. When the active material layer is completely dried by the first dryer 221, the active material layer can be excessively dried in a drying step by the second dryer 222. In this case, there can be a problem of generation of wrinkles on the electrode plate or deterioration in quality of the electrode plate. According to an embodiment, to prevent this problem, the first dryer 221 may be set to have a drying level of, for example, 60%, upon drying the active material layer.

The first densitometer 231 measures the density of the active material layer dried by the first dryer 221. That is, the first densitometer 231 measures first density data that includes the density of the active material layer on the first surface of the substrate. Here, the processor may control the first coater 211 based on the first density data measured by the first densitometer 231. For example, the processor controls at least one of an ejection pressure of the first die coater, a tilting angle, and a gap between the first die coater and the substrate based on the first density data. For example, the processor may control the first coater 211 to increase the gap upon determining based on the first density data that the density of the active material layer needs to be decreased.

The second coater 212 applies an active material to a second surface of the substrate to form an active material layer thereon. Here, the active material layer formed by the first coater 211 is placed on the first surface of the substrate. For example, the active material layer formed by the first coater 211 is incompletely dried to an undried state by the first dryer 221. Here, the active material layer is, for example, in a solution state and/or in a slurry state. The second coater 212 includes a second die coater that ejects the active material onto the substrate. For example, the second die coater may extend in the width direction of the substrate to eject the active material over an entire width of the substrate. With this structure, the second coater 212 can apply the active material evenly over a wide width of the substrate to form the active material layer thereon.

The second dryer 222 dries the active material layers on both surfaces of the substrate. Here, the active material layer on the first surface of the substrate is incompletely dried to an undried state by the first dryer 221. In addition, the active material layer on the second surface of the substrate is in a solution state and/or in slurry state, which has not yet been dried by the dryer. Here, the second dryer 222 completely dries the active material layers on both surfaces of the substrate.In an ambodiment, the second dryer 222 may have an interchangeable relationship with the first dryer 221. That is, depending on arrangement of the components included in the electrode plate manufacturing apparatus 200, the first dryer 221 and/or the second dryer 222 may perform drying of one surface of the substrate and/or drying of both surfaces of the substrate.

The second densitometer 232 measures the density of the electrode plate in which the active material layer applied to the second surface of the electrode plate is dried. That is, the second densitometer 232 measures second density data that includes the density of the active material layer formed on one surface of the substrate. Here, the processor may control the second coater 212 based on the second density data measured by the second densitometer 232. For example, the processor controls at least one of an ejection pressure of the second die coater, a tilting angle, and a gap between the second die coater and the substrate based on the second density data. For example, upon determining, based on the second density data, that the density of the active material layer needs to be reduced, the processor may control the second densitometer 232 to increase the gap. In an embodiment, the second densitometer 232 may have an interchangeable relationship with the first densitometer 231. That is, depending on an arrangement of the components included in the electrode plate manufacturing apparatus 200, the first densitometer 231 and/or the second densitometer 232 may measure the density of one surface of the substrate and/or the other surface thereof.

The processor controls all or some components of the electrode plate manufacturing apparatus 200. The processor may be embedded within the electrode plate manufacturing apparatus 200 or may be placed outside the electrode plate manufacturing apparatus 200 to control the electrode plate manufacturing apparatus 200 through a communication unit (not shown). The processor may include at least one of, for example, a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), and a field programmable gate array (FPGA).

In this way, the electrode plate manufacturing apparatus 200 can manufacture an electrode plate 300.

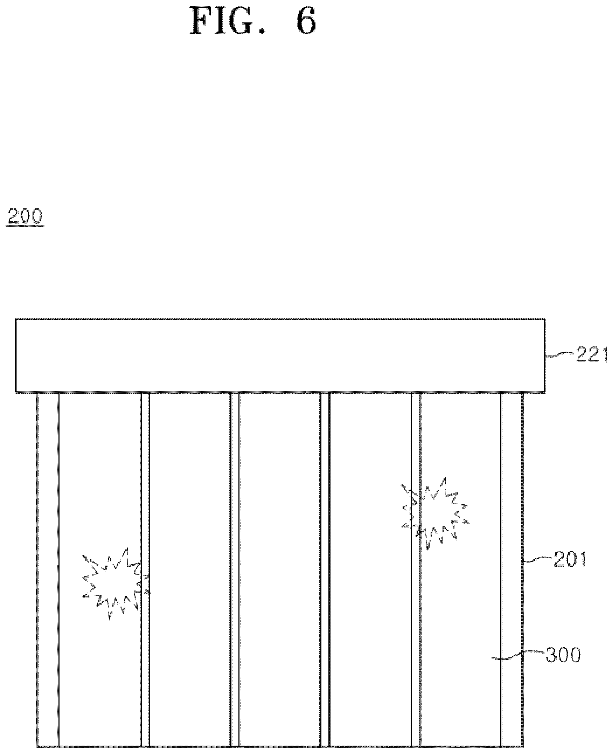

FIG. 6 is a view of an example of operation of the electrode plate manufacturing apparatus upon drying electrode plates.

FIG. 6 shows electrode plates 300 dried by the electrode plate manufacturing apparatus 200 illustrated in FIG. 5. Referring to FIG. 6, the electrode plate manufacturing apparatus 200 further includes a plate conveyor 201. The plate conveyor 201 conveys the electrode plates 300 between the respective components in the electrode plate manufacturing apparatus 200. For example, the plate conveyor 201 conveys the electrode plates 300 from the first coater 211 toward the first dryer 221.

As illustrated in FIG. 5, the first dryer 221 dries the active material layer on one surface of the substrate. In an embodiment, the first dryer 221 does not completely dry the active material layer to prevent the electrode plate 300 from being excessively dried by the second dryer 222. For example, the first dryer 221 dries the electrode plate 300 to only about 60%.

As a result, some regions of the electrode plate 300 may remain undried even after passing through the first dryer 221. Here, it is necessary to check a degree of dryness of the electrode plate 300. This is because even if the first dryer 221 emits heat to dry the electrode plate 300 to about 60%, a dried state of the electrode plate 300 may vary depending on the specifications of each model.

To this end, the electrode plate manufacturing apparatus 200 may include a temperature/humidity sensor. In an embodiment, the temperature/humidity sensor is a non-contact temperature sensor, for example, an infrared temperature/humidity sensor. The temperature/humidity sensor measures temperature/humidity based on infrared radiation of the electrode plate 300 without contacting the electrode plate 300. The temperature/humidity sensor includes a lens for focusing infrared light onto a detector. After compensation for change in ambient temperature, the temperature/humidity sensor converts the infrared radiation into an electrical signal that can be displayed as a temperature. However, the temperature/humidity sensor is a relative measurement instrument, which allows comparison of significant differences only in a case in which existing measurements are given.

According to another embodiment, the electrode plate manufacturing apparatus 200 may include a density sensor. The density sensor uses radiation to measure a density and/or weight of the electrode plate 300 in real time while the electrode plate passes through the density sensor. The density sensor is highly reliable when the electrode plate 300 is completely dry. However, since the first dryer 221 dries the electrode plate 300 to remain in an undried state, the density sensor may have low reliability.

When the degree of dryness of the electrode plate 300 is not accurately measured, there may be a problem of generation of loss for securing conditions due to change of the drying state according to the specifications of each model as described above. In addition, there may be a problem of fracture of the electrode plate 300 due to wrinkles in an uncoated portion and/or deterioration in process efficiency due to quality issues of the electrode plate 300.

Therefore, there is a need for a method for accurately measuring the degree of dryness of the electrode plate 300 in an undried state and controlling the degree of dryness of the electrode plate 300 according to the measured degree of dryness.

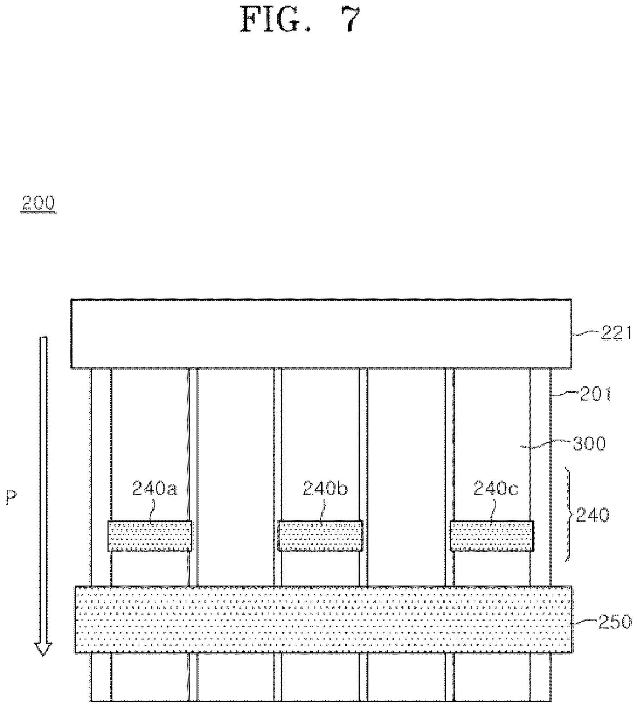

FIG. 7 is a view of an example of operation of an electrode plate manufacturing apparatus according to an embodiment of the invention upon drying electrode plates.

The electrode plate manufacturing apparatus 200 according to an embodiment further includes a sensor 240 and an assistant dryer 250 in addition to the components illustrated in FIG. 5 and FIG. 6. Accordingly, the electrode plate manufacturing apparatus 200 according to the embodiment may include the plate conveyor 201, the first coater 211, the first dryer 221, the sensor 240, the assistant dryer 250, the second coater 212, the second dryer 222, and the processor (not shown). The electrode plate manufacturing apparatus 200 may further include a first densitometer 231 and/or a second densitometer 232. However, it should be understood that the electrode plate manufacturing apparatus 200 is not limited thereto. For example, the electrode plate manufacturing apparatus 200 may not include at least some of the components shown in FIG. 5 to FIG. 7, and/or may further include other components. Herein, repeated description of the components illustrated in FIG. 5 and FIG. 6 may be omitted.

Referring to FIG. 7, the plate conveyor 201 conveys one or more electrode plates 300. In FIG. 7, P denotes a conveying direction of the electrode plates 300. For example, the plate conveyor 201 conveys a plurality of electrode plates 300 by arranging the electrode plates 300 in a direction perpendicular to the conveying direction P. For example, at least some electrode plates 300 may be linearly arranged at intervals, e.g. at predetermined intervals. Alternatively, for example, at least some electrode plates 300 may be arranged at random intervals. The plate conveyor 201 may convey one or more electrode plates 300 simultaneously and/or sequentially.

The sensor 240 measures the degree of dryness of the electrode plates 300. For example, the sensor 240 measures the degree of dryness of one or more electrode plates 300 that have been dried to an undried state by the first dryer 221. To this end, the sensor 240 may be placed downstream of the first dryer 221 in the conveying direction P of the electrode plates 300. In an embodiment, the sensor 240 is a non-contact sensor. In addition, the sensor 240 measures the degree of dryness of the electrode plate 300 rather than an environment in which the electrode plate 300 is dried (for example, humidity of a space in which the electrode plate manufacturing apparatus 200 is placed). For example, the sensor 240 may measure the content of moisture contained in the active material layer on the substrate. In addition, the sensor 240 may calculate the degree of dryness through conversion of the moisture content into the degree of dryness. The sensor 240 can measure an accurate degree of dryness of the electrode plate 300 even when the electrode plate 300 is in an undried state.

For example, the sensor 240 may measure an overall degree of dryness of one or more electrode plates 300.

For example, when there is a plurality of electrode plates 300, the sensor 240 may measure the degree of dryness of each of the plurality of electrode plates 300. In an embodiment, for example, the sensor 240 includes one or more first sensors (for example, 240a, 240c) and/or one or more second sensors 240b. The first sensors (for example, 240a, 240c) measure the degree of dryness of an electrode plate 300 placed at an edge of the plurality of electrode plates 300. For example, the first sensors (for example, 240a, 240c) measure the degree of dryness of an electrode plate 300 at one side of the plurality of electrode plates 300 arranged on the plate conveyor 201 and/or the degree of dryness of an electrode plate 300 at the other side thereof. The second sensor 240b measures the degree of dryness of an electrode plate 300 at a center of the plurality of electrode plates 300 on the plate conveyor 201. In this way, the sensor 240 may measure the degree of dryness of each of the plurality of electrode plates 300.

The processor measures the extent to which the assistant dryer 250 dries the electrode plate 300 based on the degree of dryness of the electrode plate 300, as measured by the sensor 240. For example, all of the electrode plates 300 may fail to achieve a target degree of dryness. In this case, the processor allows the assistant dryer 250 to further heat all of the plurality of electrode plates 300. In addition, for example, only some of the plurality of electrode plates 300 may fail to achieve the target degree of dryness. In this case, the processor allows the assistant dryer 250 to further heat only some of the plurality of electrode plates 300, which have failed to achieve the target degree of dryness.

As such, the assistant dryer 250 performs additional drying for each of one or more electrode plates 300. In an embodiment, the assistant dryer 250 is placed above the plate conveyor 201 and emits heat toward the electrode plates 300 below the assistant dryer to perform additional drying.

In an embodiment, the assistant dryer 250 emits radiant heat using at least one of near infrared (NIR) light, ultraviolet (UV) light, or infrared (IR) light to perform additional drying. Preferably, the assistant dryer 250 includes a localized heating facility adapted to emit near infrared (NIR) light. With this structure, the assistant dryer 250 can perform additional heating through fast and direct heat transfer with high thermal energy density using radiant heat in the form of near infrared light. As a result, the assistant dryer 250 can improve the degree of dryness and/or quality of the electrode plate 300 and the electrode plate manufacturing apparatus 200 can be miniaturized. Further, the assistant dryer 250 allows rapid start of the facility and can achieve drying within a few seconds.

To perform additional drying based on the measurements of the sensor 240, the assistant dryer 250 may be placed downstream of the sensor 240 in the conveying direction P of the electrode plates 300.

With such a configuration, the electrode plate manufacturing apparatus 200 according to an embodiment can ensure that the plurality of electrode plates 300 has a uniform degree of dryness. That is, the electrode plate manufacturing apparatus 200 can improve drying uniformity in each row, thereby improving an undried rate.

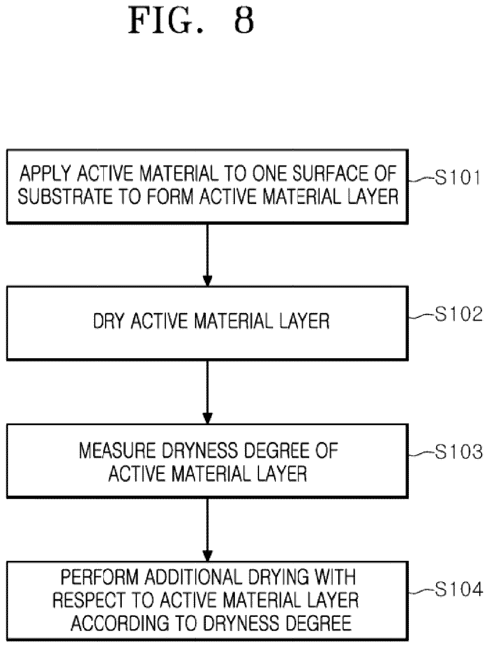

FIG. 8 is a flowchart illustrating an electrode plate manufacturing method according to an embodiment of the present invention.

Referring to FIG. 8, the electrode plate manufacturing method capable of drying an electrode plate 300 through the electrode plate manufacturing apparatus 200 illustrated in FIG. 7 to improve drying uniformity of the electrode plate will be described.

The electrode plate manufacturing method according to an embodiment includes the step of applying an active material onto a first surface of a substrate to form an active material layer (S101). The first coater 211 applies the active material onto the first surface of the substrate. Description of Step S101 is the same as or similar to the description of the first coater 211 illustrated in FIG. 5 to FIG. 7.

The electrode plate manufacturing method according to the embodiment includes the step of drying the active material layer on the substrate (S102). The first dryer 221 dries the active material layer formed by the first coater 211. Here, the first dryer 221 dries a plurality of electrode plates 300 such that the plurality of electrode plates 300 has, for example, a first drying rate. The first drying rate is greater than 0% and less than 100% and is a suitable value to prevent the electrode plates 300 from suffering deterioration in quality due to excessive or insufficient drying. For instance, the first drying rate may range between 50% and 70%. Preferably, the first drying rate may be about 60%. Description of Step S 102 is the same as or similar to the description of the first dryer 221 illustrated in FIG. 5 to FIG. 7.

The electrode plate manufacturing method according to an embodiment includes the step of measuring a degree of dryness of the active material layer (S 103). The sensor 240 measures the degree of dryness of the active material layer. For example, the sensor 240 measures the degree of dryness of each of the electrode plates 300 and quantifies the degree of dryness of each of the electrode plates 300. Description of Step S103 is the same as or similar to the description of the sensor 240 illustrated in FIG. 7.

The electrode plate manufacturing method according to an embodiment includes the step of additional drying the active material layer according to the degree of dryness (S104).

The assistant dryer 250 may further dry the electrode plates 300 according to the degree of dryness of each of the electrode plates 300. The assistant dryer 250 may further dry the electrode plates 300 according to the degree of dryness of the active material layer, as measured by the sensor 240.

For example, the assistant dryer 250 further dries all or some of the plurality of electrode plates 300 such that each of the electrode plates 300 has a second drying rate. The second drying rate is greater than or equal to the first drying rate. Further, the second drying rate is less than 100%. As a result, the assistant dryer 250 can ensure that the plurality of electrode plates 300 has a uniform degree of dryness while simultaneously increasing the drying rate of the electrode plates 300. In addition, the assistant dryer 250 prevents or substantially prevents the electrode plates 300 from being excessively dried by the second dryer 222 in the subsequent process by not allowing the electrode plates 300 to be dried to 100%. Description of Step S104 is the same as or similar to the description of the assistant dryer 250 illustrated in FIG. 7.

As such, the electrode plate manufacturing apparatus according to an embodiment secures quality of the electrode plates by measuring the moisture content of the electrode plates 300 in each row to quantify the degree of dryness (or un-dryness) and performing additional heating based on the quantified degree of dryness.

Further, the method illustrated in FIG. 7 and FIG. 8 may be realized by measuring the moisture content of the electrode plates 300 through the sensor 240 and quantifying the degree of dryness based on the moisture content. Herein, the sensor 240 will be described in further detail.

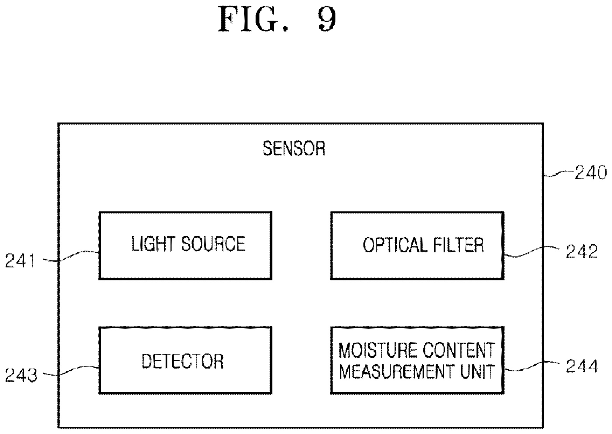

FIG. 9 is a schematic block diagram illustrating components of a sensor 240 according to an embodiment of the present invention.

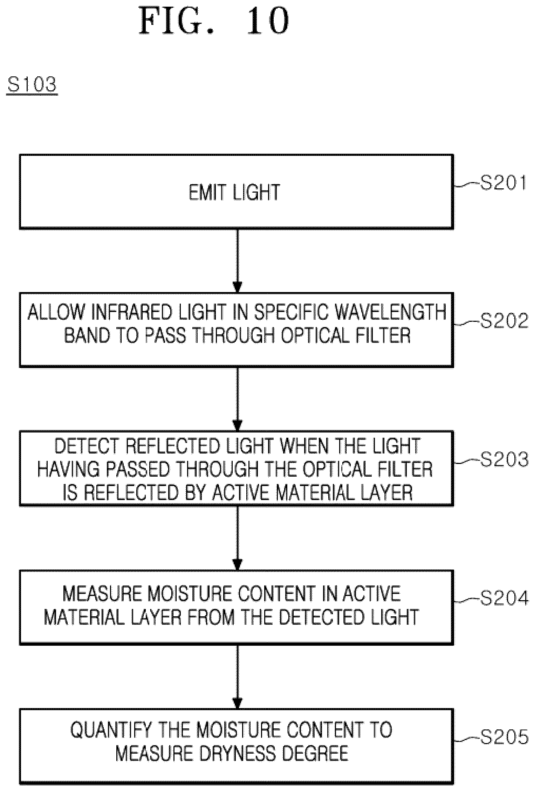

FIG. 10 is a flowchart illustrating an example of Step S103 of FIG. 8.

Referring to FIG. 9, the sensor 240 according to an embodiment includes a light source 241, an optical filter 242, a detector 243, and a moisture content measurement unit 244. Each of these components is operated to measure the degree of dryness of the active material layer of the electrode plate 300 as follows.

Referring to FIG. 10, the sensor 240 according to an embodiment emits light (S201).

The light source 241 emits light. For example, the light source 241 emits light toward the electrode plate 300. Alternatively, for example, the light source 241 emits light in a direction so as not to travel towards the electrode plate 300. In this case, the sensor 240 may further include a mirror (not shown) that reflects light emitted from the light source 241. The mirror reflects the light to travel towards the optical filter 242.

Referring to FIG. 10, the sensor 240 according to an embodiment allows only infrared light in a specific wavelength band among the light emitted therefrom to pass through the optical filter (S202).

The optical filter 242 allows only the infrared light in a specific wavelength band among the light emitted from the light source 241 to pass therethrough. The optical filter 242 allows the infrared light in a specific wavelength band to travel toward the electrode plate 300.

At least some fraction of light reaching the electrode plate 300 may be absorbed by O-H bonds of water molecules contained in the active material layer. Another fraction of the light reaching the electrode plate 300 may not be absorbed by the active material layer and may be reflected by the active material layer.

Referring to FIG. 10, when light having passed through the optical filter 242 is reflected by the active material layer, the sensor 240 detects the reflected light (S203).

The detector 243 detects the reflected light when the light having passed through the optical filter 242 is reflected by the electrode plate 300. For example, the detector 243 collects the light reflected by the active material layer. In addition, the detector 243 receives the collected light and detects the intensity of the reflected light. The detector 243 is a light-receiving element and includes, for example, an InGaAsSb semiconductor.

Referring to FIG. 10, the sensor 240 measures the content of moisture in the active material layer from the detected light (S204).

The moisture content measurement unit 244 measures the content of moisture contained in the electrode plate 300 based on the intensity of light detected by the detector. For example, the moisture content measurement unit 244 digitizes the detected intensity of light to measure the moisture content through calibration. Specifically, the moisture content measurement unit 244 may determine absorbance based on the intensity of the reflected light and may calculate the moisture content of the active material layer according to the absorbance.

Referring to FIG. 10, the sensor 240 according to the embodiment may quantify the moisture content to measure the degree of dryness (S205). For example, the processor may quantify an undried state of the electrode plate 300 based on the moisture content.

In this way, the sensor 240 according to an embodiment can accurately measure the moisture content of the active material layer in the electrode plate 300.

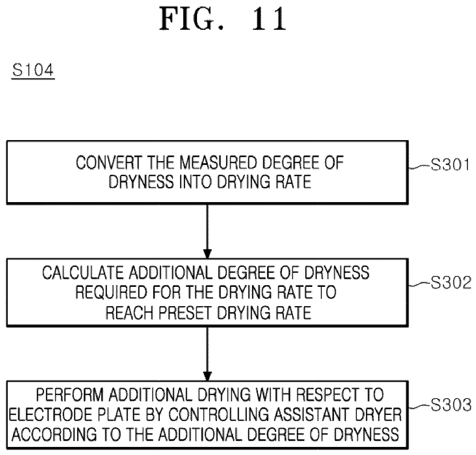

FIG. 11 is a flowchart illustrating an example of S 104 of FIG. 8.

FIG. 11 illustrates operation of the assistant dryer 250 according to one embodiment of the present invention.

The processor according to an embodiment converts the measured degree of dryness to a drying rate (S301). The processor converts the degree of dryness of each of the plurality of electrode plates 300 into the drying rate. As a result, the processor determines a dried state of each of the electrode plates 300.

The processor according to an embodiment calculates an additional degree of dryness required for the drying rate to reach a preset drying rate (S302). The preset drying rate is, for example, the second drying rate described above in FIG. 8. The processor calculates the additional degree of dryness required for each of the electrode plates 300 to reach the second drying rate. For example, the processor determines a location of each of the electrode plates 300, a radiant heat amount and/or time required for additional drying for each of the electrode plates 300, and the like.

The processor according to an embodiment performs additional drying with respect to the electrode plates 300 through the assistant dryer 250 based on the calculated additional degree of dryness (S303).

For example, the assistant dryer 250 may dry each of the plurality of electrode plates 300 to reach a second drying rate that has the same value as the first drying rate. In this case, some electrode plates 300 may have been dried to the first drying rate by the dryer 220, whereas the other electrode plates 300 may not have been dried to the first drying rate by the dryer 220. In this case, the assistant dryer 250 may perform additional drying only with respect to the other electrode plates 300 such that all of the plurality of electrode plates 300 has a uniform drying rate in each row.

Alternatively, for example, the assistant dryer 250 may dry each of the plurality of electrode plates 300 to reach a second drying rate that exceeds the first drying rate. In this case, a first group of electrode plates 300 may have been dried to satisfy the second drying rate by the dryer 220, a second group of electrode plates 300 may have been dried by the dryer 220 to exceed the first drying rate, and a third group of electrode plates 300 may not have been dried to satisfy the first drying rate by the dryer 220. In this case, the assistant dryer 250 may not perform additional drying with respect to some of the plurality of electrode plates 300. In addition, the assistant dryer 250 may perform additional drying with respect to the second group and the third group of electrode plates 300. Furthermore, the assistant dryer 250 may perform additional drying more intensely with respect to the third group of electrode plates 300. Here, the assistant dryer 250 may perform additional drying by, for example, emitting radiant heat, and may perform additional drying more intensely by increasing the intensity (for example, temperature) of the radiant heat emitted therefrom and/or by increasing the time for which the radiant heat is emitted. With this operation, the electrode plate manufacturing apparatus 200 according to the embodiment can improve drying uniformity of the plurality of electrode plates 300 in each row while appropriately increasing the drying rate of the electrode plates.

The processor may control the assistant dryer 250 to improve the drying rate of the electrode plates 300. Further, the processor can improve drying uniformity of the electrode plates 300 in each row.

As such, the electrode plate manufacturing apparatus 200 according to an embodiment may control the assistant dryer 250 through artificial intelligence (AI) control to improve coating quality and/or process efficiency.

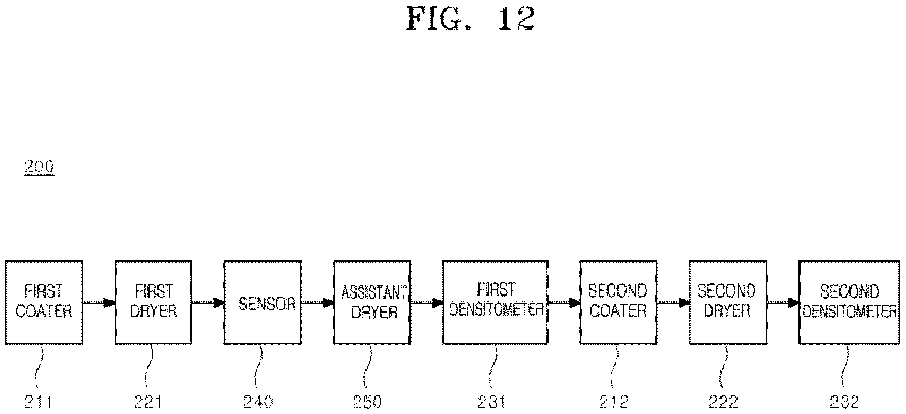

FIG. 12 is a schematic block diagram illustrating components of an electrode plate manufacturing apparatus according to an embodiment of the present invention.

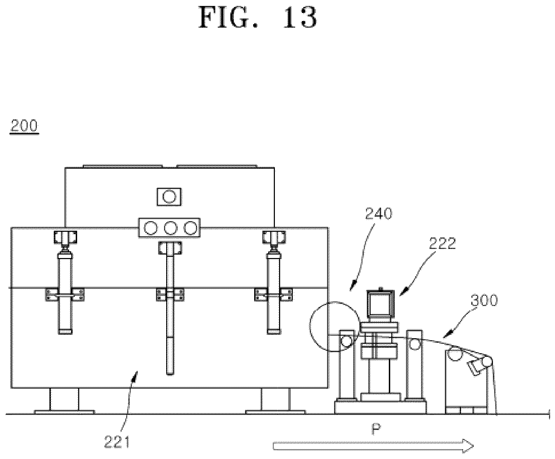

FIG. 13 is a view of the electrode plate manufacturing apparatus according to an embodiment of the present invention.

Referring to FIG. 12, the electrode plate manufacturing apparatus 200 according to an embodiment includes the first coater 211, the first dryer 221, the sensor 240, the assistant dryer 250, the second coater 212, the second dryer 222, and the processor, as shown in FIGS. 5 to 11. In addition, the electrode plate manufacturing apparatus 200 may further include the first densitometer 231 and/or the second densitometer 232.

Referring to FIG. 13, in an embodiment the sensor 240 may be placed or located at an outlet of the first dryer 221. The outlet of the first dryer 221 refers to a region of the first dryer through which the electrode plates 300 dried by the first dryer 221 exit. As the sensor 240 is placed at the outlet of the first dryer 221, the sensor 240 can accurately determine the degree of dryness of the electrode plates 300. However, the location of the sensor 240 is not limited thereto and, for example, the sensor 240 may be placed inside the first dryer 221 to sense the degree of dryness of the electrode plates 300 in real time while drying is performed with respect to the electrode plates 300.

Referring again to FIG. 13, the assistant dryer 250 may be placed at the outlet of the first dryer 221. Here, the assistant dryer 250 may be placed on the same vertical line as the sensor 240 or may be placed downstream of the sensor 240. The downstream location is determined based on the conveying direction of the electrode plate 300.

For each component of the electrode plate manufacturing apparatus 200, the same or similar description as illustrated in FIGS. 5 to 11 may be omitted.

FIGS. 5 and 6 do not provide any measure for accurate measurement of the degree of dryness of the electrode plate 300. As a result, it is difficult to achieve accurate measurement of density of the active material layer even after the active material layer corresponding to one surface of the electrode plate 300 is dried by the first dryer 221.

However, the electrode plate manufacturing apparatus 200 according to an embodiment can accurately measure the degree of dryness of the active material layer through the sensor 240, and/or additionally dry the electrode plates 300 to have uniform dryness in each row through the assistant dryer 250, and/or additionally dry the electrode plate 300 to a required degree of dryness. As a result, the electrode plate manufacturing apparatus 200 can accurately measure the density of the electrode plate 300 via the first densitometer 231. Accordingly, the processor may provide feedback to the first coater 211 based on the measurement of the first densitometer 231.

As such, the electrode plate manufacturing apparatus 200 and/or the electrode plate manufacturing method according to embodiments of the present invention may provide the sensor 240 to determine the degree of dryness of the electrode plates 300, quantify the degree of dryness of the electrode plates 300, and control the degree of dryness using the assistant dryer 250 through AI control, thereby improving coating quality of the electrode plates and/or improving process efficiency.

Although the present invention has been described with reference to some embodiments and drawings illustrating aspects thereof, the present invention is not limited thereto. Various modifications and variations can be made by a person skilled in the art to which the present invention belongs within the scope of the invention and the claims.

**<List of Reference Numerals>**

| | | | |
|---|---|---|---|
| 100: | Lithium secondary battery | 10: | Cathode |
| 11: | Cathode lead tab | 12: | Cathode terminal |
| 20: | Anode | 21: | Anode lead tab |
| 22: | Anode terminal | 30: | Separator |
| 40: | Electrode assembly | 50: | Case |
| 60: | Sealing member | 70: | Electrode tab |
| 71: | Cathode tab | 72: | Anode tab |

## Claims

1. An electrode plate manufacturing apparatus (200) comprising:
a plate conveyor (201) adapted to convey a plurality of electrode plates (300) each having an active material layer formed on a substrate thereof;
a dryer (220) adapted to dry the electrode plates (300) conveyed by the plate conveyor (201);
a sensor (240) adapted to measure a degree of dryness of each of the plurality of dried electrode plates (300);
an assistant dryer (250) adapted to perform additional drying with respect to at least one of the plurality of electrode plates (300); and
a processor adapted to control the assistant dryer (250) based on the degree of dryness.

2. The electrode plate manufacturing apparatus (200) according to claim 1, wherein the sensor (240) is adapted to measure the degree of dryness of the electrode plate (300) by measuring the content of moisture contained in the active material layer.

3. The electrode plate manufacturing apparatus (200) according to claim 1 or 2, wherein the sensor (240) comprises:
a light source (241) adapted to emit light;
an optical filter (242) adapted to allow only infrared light in a specific wavelength band among the light emitted from the light source (241) to pass therethrough;
a detector (243) adapted to detect reflected light when light having passed through the optical filter (242) is reflected by the active material layer; and
a moisture content measurement unit (244) adapted to measure the content of moisture contained in the active material layer from the light detected by the detector (243).

4. The electrode plate manufacturing apparatus (200) according to one of the preceding claims, wherein the plate conveyor (201) is adapted to convey the plurality of electrode plates (300) arranged in a direction perpendicular to a conveying direction (P) of the electrode plates (300).

5. The electrode plate manufacturing apparatus (200) according to claim 4, wherein the sensor (240) include at least one first sensor (240a, 240c) measuring a degree of dryness of an electrode plate (300) placed at an edge of the plurality of electrode plates (300); and a second sensor (240b) measuring a degree of dryness of an electrode plate (300) placed at a center of the plurality of electrode plates (300).

6. The electrode plate manufacturing apparatus (200) according to one of the preceding claims, wherein the assistant dryer (250) is placed above the plate conveyor (201) and is adapted to emit heat toward the active material layer to perform additional drying.

7. The electrode plate manufacturing apparatus (200) according to one of the preceding claims, wherein the assistant dryer (250) is adapted to emit radiant heat using at least one of near infrared, NIR, light, ultraviolet, UV, light, or infrared, IR, light.

8. The electrode plate manufacturing apparatus (200) according to one of the preceding claims, wherein the processor is adapted to allow the dryer (220) to dry the plurality of electrode plates (300) to a first drying rate and to allow the assistant dryer (250) to additionally dry the plurality of electrode plates (300) to a second drying rate, the second drying rate being greater than the first drying rate and less than 100%.

9. The electrode plate manufacturing apparatus (200) according to claim 8, wherein the processor is adapted to calculate an additional degree of dryness required for each of the plurality of electrode plates (300) to reach the second drying rate and to control the assistant dryer (250) according to the calculated additional degree of dryness to perform additional drying with respect to all or some of the plurality of electrode plates (300).

10. The electrode plate manufacturing apparatus (200) according to one of the preceding claims, further comprising:
a first coater (211) adapted to apply an active material to a first surface of the substrate to form an active material layer thereon;
a second coater (212) adapted to apply an active material to a second surface of the substrate to form an active material layer thereon after additional drying is performed with respect to the electrode plate.

11. The electrode plate manufacturing apparatus (200) according to claim 10, wherein the dryer (220) is adapted to dry both surfaces of the electrode plate (300) having the active material layer formed on the second surface of the substrate by the second coater (212).

12. The electrode plate manufacturing apparatus (200) according to one of the preceding claims, further comprising:
a densitometer (231, 232) measuring a density of the active material layer of the electrode plate (300) subjected to additional drying.

13. An electrode plate manufacturing method comprising:
applying an active material onto a first surface of a substrate to form an active material layer thereon;
drying the active material layer;
measuring a degree of dryness of the active material layer; and
performing additional drying with respect to the active material layer according to the degree of dryness thereof.

14. The electrode plate manufacturing method according to claim 13, wherein the step of measuring a degree of dryness comprises:
emitting light toward the active material layer;
allowing infrared light in a specific wavelength band among the emitted light to pass through an optical filter (242);
detecting reflected light when light having passed through the optical filter (242) is reflected by the active material layer;
measuring the content of moisture contained in the active material layer from the detected light; and
calculating the content of moisture to measure the degree of dryness.

15. The electrode plate manufacturing method according to claim 13 or 14, further comprising:
applying an active material to a second surface of the substrate to form an active material layer thereon after additional drying is performed; and
drying the active material layers on the first surface and the second surface of the substrate.
